# EUROPEAN PATENT APPLICATION

(11) **EP 4 538 168 A1**
(43) Date of publication of application: **16.04.2025**
(21) Application number: 23839492.8
(22) Date of filing: 30.06.2023
(51) Int. Cl.: B63H 21/38, F17C 13/00

(54) **FLOATING BODY**

(30) Priority: 13.07.2022 JP 2022112318
(71) Applicant: Mitsubishi Shipbuilding Co., Ltd., Tokyo 108-8015 (JP)
(72) Inventor: YAMADA Daisuke, Yokohama-shi, Kanagawa 220-8401 (JP); UEDA Shin, Yokohama-shi, Kanagawa 220-8401 (JP); TSUMURA Kenji, Yokohama-shi, Kanagawa 220-8401 (JP); WATANABE Yusuke, Yokohama-shi, Kanagawa 220-8401 (JP); OKUDA Koichi, Yokohama-shi, Kanagawa 220-8401 (JP); YOSHIDA Atsushi, Yokohama-shi, Kanagawa 220-8401 (JP); SEINO Ryu, Yokohama-shi, Kanagawa 220-8401 (JP); YOSHINO Seigo, Yokohama-shi, Kanagawa 220-8401 (JP); HONDA Akihiro, Yokohama-shi, Kanagawa 220-8401 (JP); TAKAMATSU Tomoteru, Yokohama-shi, Kanagawa 220-8401 (JP)
(74) Representative: Studio Torta S.p.A.
(86) International application number: PCT/JP2023/024433
(87) International publication number: WO 2024/014320

(57) **Abstract**

A floating body according to the present disclosure comprises: a floating main body; a tank that is provided to the floating main body and that stores a liquefied gas as a fuel; a fuel consumer that is driven with the fuel and that is disposed inside an engine room of the floating main body; a fuel line that connects the fuel consumer and the tank; a first fuel preparation room that accommodates a fuel device provided along the fuel line; a second fuel preparation room that accommodates a main gas fuel valve provided along the fuel line, and that is provided further to the engine room side than the first fuel preparation room and is separated from the engine room; and purge equipment that is capable of purging an area between the fuel consumer and the main gas fuel valve in the fuel line.

## Description

### Technical Field

The present disclosure relates to a floating body.

Priority is claimed on Japanese Patent Application No. 2022-112318 filed on July 13, 2022, the content of which is incorporated herein by reference.

### Background Art

For example, PTL 1 discloses a ship in which ammonia present in a pipe system connecting a tank in which ammonia is stored and an internal combustion engine is purged with an inert gas through a vent pipe. In this ship, an opening-closing valve is provided in both a supply line and a return line in the pipe system, and the ammonia in the supply line and in the return line on an internal combustion engine side with respect to the opening-closing valve is a target of the purging.

In a ship that handles ammonia or a liquefied gas such as liquefied petroleum gas (LPG), liquefied natural gas (LNG), or the like as fuel, a main gas fuel valve (master gas valve) as the opening-closing valve described above is provided in a line that exchanges fuel between a tank in which the fuel is stored and a fuel consumer such as a main engine. This main gas fuel valve is disposed in an external chamber isolated from an engine room or the like in which the fuel consumer is disposed. For example, a pump for fuel supply and a fuel consumer such as a heat exchanger for fuel heating may be accommodated in this chamber together with the main gas fuel valve.

### Citation List

### Patent Literature

[PTL 1] Japanese Patent No. 6934555

### Summary of Invention

### Technical Problem

In a case where the chamber in which the main gas fuel valve is accommodated is disposed at a position far from an engine room, a region in a pipe in which fuel to be purged is present is increased. In this case, there is a problem in that an amount of the fuel to be purged increases.

The present disclosure is made to solve the above-described problems, and an object of the present disclosure is to provide a floating body capable of suppressing an increase in an amount of fuel to be purged.

### Solution to Problem

In order to solve the above problems, a floating body according to the present disclosure includes a floating main body, a tank which is provided in the floating main body and in which a liquefied gas as fuel is stored, a fuel consumer which is driven by the fuel and is disposed in an engine room of the floating main body, a fuel line which connects the fuel consumer and the tank, a first fuel preparation room in which a fuel device provided on the fuel line is accommodated, a second fuel preparation room in which a main gas fuel valve provided on the fuel line is accommodated and which is provided to be partitioned from the engine room on an engine room side with respect to the first fuel preparation room, and purge equipment which is capable of performing purging between the main gas fuel valve and the fuel consumer in the fuel line.

### Advantageous Effects of Invention

According to the present disclosure, it is possible to provide a floating body capable of suppressing an increase in an amount of fuel to be purged.

### Brief Description of Drawings

Fig. 1 is a side view of a floating body according to a first embodiment of the present disclosure.
Fig. 2 is an enlarged view of a main part of the floating body according to the first embodiment of the present disclosure.
Fig. 3 is an enlarged view of a main part of a floating body according to a second embodiment of the present disclosure.
Fig. 4 is an enlarged view of a main part of a floating body according to a third embodiment of the present disclosure.
Fig. 5 is an enlarged view of a main part of a floating body according to a fourth embodiment of the present disclosure.
Fig. 6 is an enlarged view of a main part of a floating body according to another embodiment of the present disclosure.

### Description of Embodiments

Hereinafter, an embodiment of a floating body according to the present disclosure will be described with reference to the accompanying drawings.

### <First Embodiment>

### [Floating Body]

A floating body in the present embodiment is a ship that uses a liquefied gas as fuel. Examples of the liquefied gas include ammonia. A type of the ship is not limited to a specific type. Examples of the type of the ship include a liquefied gas carrier, a ferry, a RO-RO ship, a vehicle carrier, a passenger ship, and the like.

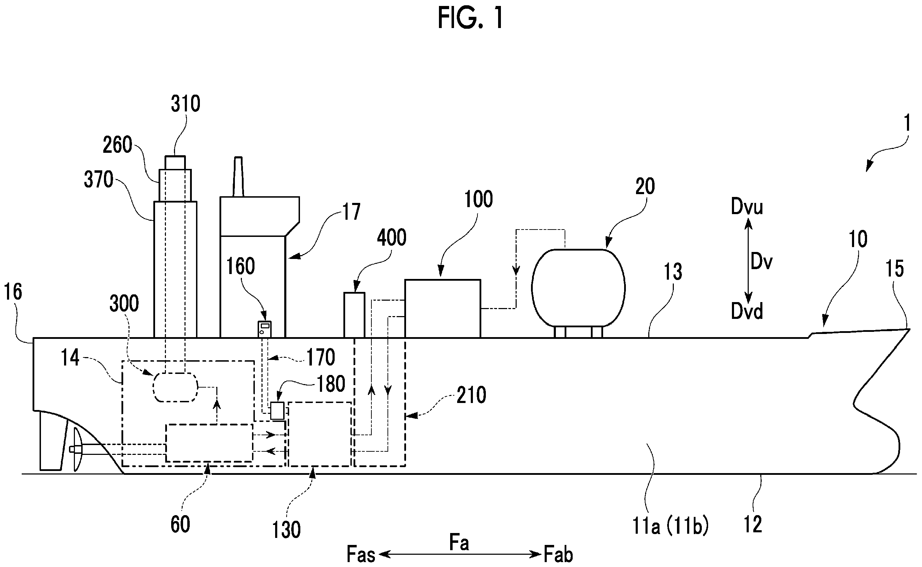

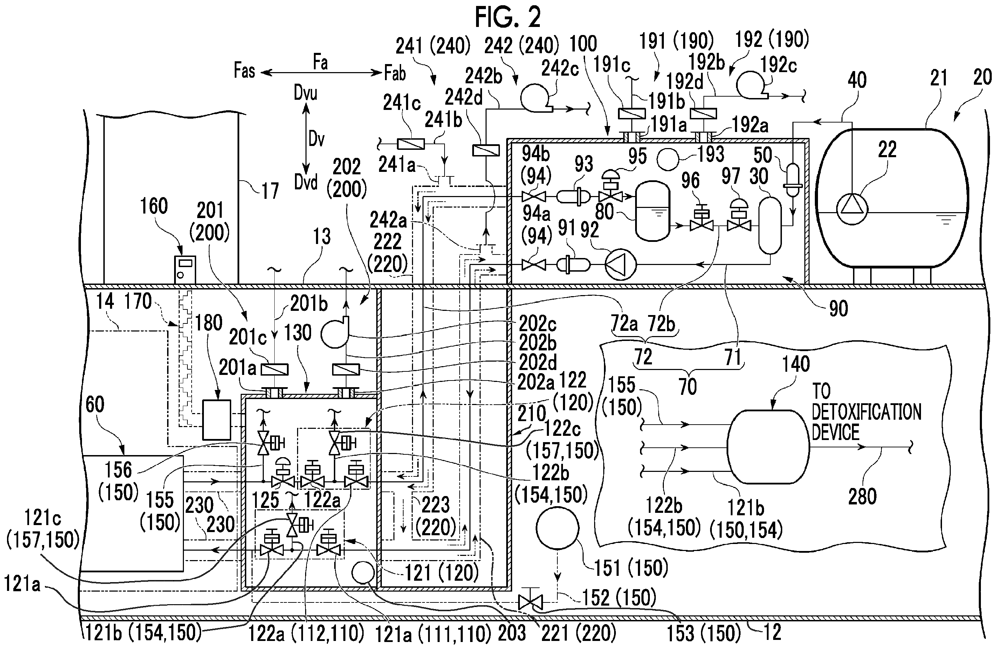

As shown in Figs. 1 and 2, a floating body 1 includes a floating main body 10, a superstructure 17, a fuel tank 20 (tank), a mixing chamber 30 (tank), a connection line 40, a temperature adjuster 50, a fuel consumer 60, a fuel line 70, a fuel device 90, a first fuel preparation room 100, a main gas fuel valve 110, a double block and bleed valve 120, an adjustment valve 125, a second fuel preparation room 130, a knockout drum 140, purge equipment 150, an entry way unit 160, a passage unit 170, an air lock chamber 180, first ventilation equipment 190, a first detection unit 193, second ventilation equipment 200 (ventilation equipment), a second detection unit 203 (detection unit), a pipe chamber 210, a first outer pipe unit 220, a connection pipe unit 223, a second outer pipe unit 230, and outer pipe ventilation equipment 240.

### (Floating Main Body)

As shown in Fig. 1, the floating main body 10 includes broadsides 11a and 11b, a bottom 12, an upper deck 13, and an engine room 14. The broadsides 11a and 11b include a pair of broadside plates that forms left and right broadsides 11a and 11b, respectively. The bottom 12 includes a bottom plate that connects these broadsides 11a and 11b.

The upper deck 13 is an exposed deck provided over each of the upper sides of the pair of broadside plates in an up-down direction Dv (up-down direction in the drawing). Hereinafter, the upper side in the up-down direction Dv is simply referred to as an "upper side Dvu", and the lower side in the up-down direction Dv is simply referred to as a "lower side Dvd".

An outer shell of the floating main body 10 is formed by the broadsides 11a and 11b, the bottom 12, and the upper deck 13 to have a box shape in a cross-sectional view orthogonal to a bow-stern direction Fa. The bow-stern direction Fa in the present embodiment is a direction (left-right direction in the drawing) extending from a stern 16 to a bow 15 of the floating main body 10. In addition, a bow side (right side in the drawing) in the bow-stern direction Fa is simply referred to as a "bow side Fab", and a stern side (left side in the drawing) in the bow-stern direction Fa is simply referred to as a "stern side Fas".

Here, the superstructure 17 is a structure that is provided to extend from the upper deck 13 toward the upper side Dvu. For example, the superstructure has an accommodation space, a bridge, and the like.

The engine room 14 is a chamber that accommodates the fuel consumer 60. The engine room 14 is disposed, for example, between the broadsides 11a and 11b of the floating main body 10 on the lower side Dvd with respect to the superstructure 17. The engine room 14 is disposed inside the floating main body 10 and is partitioned by, for example, a bulkhead or the like of the floating main body 10. As the engine room 14 in the present embodiment, an engine room that accommodates a main engine can be exemplified.

### (Fuel Tank)

For example, the fuel tank 20 in the present embodiment is a tank provided on the upper deck 13 closer to the bow side Fab than the superstructure 17.

As shown in Fig. 2, the fuel tank 20 includes a tank main body 21 and a low-pressure pump 22.

The tank main body 21 stores liquefied ammonia, which is fuel for driving the fuel consumer 60, therein. The low-pressure pump 22 is disposed in the tank main body 21. The low-pressure pump 22 can pump the fuel in the tank main body 21 to the outside of the tank main body 21.

### (Mixing Chamber)

The mixing chamber 30 is a tank that receives the fuel pumped from the fuel tank 20 therein. For example, the mixing chamber 30 in the present embodiment is provided on the upper deck 13 between the superstructure 17 and the fuel tank 20.

### (Connection Line)

The connection line 40 is a pipe that connects the fuel tank 20 and the mixing chamber 30. One end of the connection line 40 is connected to the low-pressure pump 22 in the tank main body 21. The other end of the connection line 40 is connected to the mixing chamber 30. The fuel in the tank main body 21 of the fuel tank 20 is sent to the mixing chamber 30 through the connection line 40 by driving the low-pressure pump 22.

### (Temperature Adjuster)

The temperature adjuster 50 adjusts the temperature of the fuel flowing through the connection line 40. The temperature adjuster 50 in the present embodiment is a heat exchanger provided in the connection line 40. For example, steam or liquid generated in an auxiliary boiler or the like (not shown) provided in the engine room 14 inside the floating main body 10 is introduced from the outside into the temperature adjuster 50. Hereinafter, the steam or the liquid is referred to as a "heat medium". The heat medium and the fuel flowing through the connection line 40 are subjected to heat exchange in the temperature adjuster 50, so that the temperature of the fuel flowing from the fuel tank 20 to the mixing chamber 30 is appropriately adjusted.

### (Fuel Consumer)

The fuel consumer 60 is a device driven by fuel. The fuel consumer 60 generates thermal energy by combusting fuel. The fuel consumer 60 is disposed in the engine room 14. A main engine that propels the floating body 1 as a ship, an engine generator that supplies electricity to the inside of the floating main body 10, a boiler that generates steam as working fluid, and the like can be exemplified as the fuel consumer 60. The fuel consumer 60 of the present embodiment is a main engine that uses ammonia as fuel.

The exhaust gas generated by combusting the fuel via the fuel consumer 60 is purified by, for example, a denitration apparatus 300 (see Fig. 1) such as a selective catalytic reduction (SCR). The exhaust gas purified by the denitration apparatus 300 is released to the atmosphere through a flue 310 that penetrates the upper deck 13 and that extends to the upper side Dvu in a state of being connected to the denitration apparatus 300.

A portion of the flue 310, which extends outside the floating main body 10, is surrounded by an engine casing 260 and a funnel 270. The flue 310, the engine casing 260, and the funnel 270 are disposed on the stern side Fas with respect to the superstructure 17, for example.

### (Fuel Line)

As shown in Fig. 2, the fuel line 70 connects the mixing chamber 30 and the fuel consumer 60. The fuel line 70 includes a supply line 71 and a return line 72.

The supply line 71 is a pipe for causing the liquid-state fuel to flow from the mixing chamber 30 to the fuel consumer 60.

The supply line 71 is not limited to a configuration in which the liquid-state fuel flows toward the fuel consumer 60. The supply line 71 may allow a gas-state fuel (boil-off gas) generated by, for example, the natural vaporization of the liquid-state fuel in the fuel tank 20 or a gas-state fuel generated by, for example, the vaporization of the liquid-state fuel in a forced vaporizer (not shown) provided in the supply line 71 to flow toward the fuel consumer 60 (not shown).

The return line 72 is a pipe for causing the fuel to flow from the fuel consumer 60 to the mixing chamber 30. Excess fuel that is not used as fuel in the fuel consumer 60 flows into the return line 72.

The fuel returned to the mixing chamber 30 by the return line 72 merges with the fuel supplied from the fuel tank 20 in the mixing chamber 30. That is, the fuel returned from the return line 72 to the mixing chamber 30 is supplied again to the fuel consumer 60.

### (Fuel Device)

The fuel device 90 is a device that adjusts the temperature and pressure of the fuel flowing through the fuel line 70. The fuel device 90 in the present embodiment includes a high-pressure pump 92, a first heat exchanger 91, a second heat exchanger 93, a main valve 94, a first valve 95, a catch tank 80, a second valve 96, and a third valve 97.

The high-pressure pump 92 is provided in the supply line 71. The high-pressure pump 92 is driven to pump the fuel in the mixing chamber 30 toward the fuel consumer 60 through the supply line 71. The high-pressure pump 92 in the present embodiment pumps the fuel at a higher pressure than that of the low-pressure pump 22 of the fuel tank 20.

The first heat exchanger 91 is provided in the supply line 71 closer to a fuel consumer 60 side than the high-pressure pump 92. The heat medium is introduced into the first heat exchanger 91 from the outside. The heat medium and the fuel flowing through the supply line 71 are subjected to heat exchange in the first heat exchanger 91, so that the temperature of the fuel flowing from the mixing chamber 30 to the fuel consumer 60 is appropriately adjusted.

The second heat exchanger 93 is provided in the return line 72. The heat medium is introduced into the second heat exchanger 93 from the outside. The heat medium and the fuel flowing through the return line 72 are subjected to heat exchange in the second heat exchanger 93, so that the fuel flowing from the fuel consumer 60 to the mixing chamber 30 is cooled.

The main valve 94 is an on/off valve provided in the fuel line 70.

The main valve 94 in the present embodiment has a first main valve 94a that is provided on the fuel consumer 60 side with respect to the first heat exchanger 91 in the supply line 71, and a second main valve 94b that is provided on the fuel consumer 60 side with respect to the second heat exchanger 93 in the return line 72.

The first main valve 94a can be transitioned to a state in which the fuel in the supply line 71 flows toward the fuel consumer 60 or a state in which the fuel does not flow toward the fuel consumer 60. The second main valve 94b can be transitioned to a state in which the fuel in the return line 72 flows from the fuel consumer 60 toward the mixing chamber 30 or a state in which the fuel does not flow from the fuel consumer 60 toward the mixing chamber 30.

The first valve 95 is an adjustment valve provided on a mixing chamber 30 side with respect to the second heat exchanger 93 in the return line 72. In a case where the main valve 94 is in the open state, the first valve 95 can adjust the flow rate and pressure of the fuel flowing toward the mixing chamber 30 through the return line 72 by the opening degree being adjusted. The operation of changing the open and closed state of the first valve 95 is performed manually by the crew member of the floating body 1 or automatically.

The catch tank 80 is provided on the mixing chamber 30 side with respect to the first valve 95 in the return line 72. In a case where the fuel used by the fuel consumer 60 is switched from ammonia to other fuel, the catch tank 80 recovers the ammonia present in a region extending from the main gas fuel valve 110 (first master fuel valve 111) described below to the catch tank 80 to include the inside of the fuel consumer 60.

The region extending from the main gas fuel valve 110 to the catch tank 80 to include the inside of the fuel consumer 60 here means the inside of the supply line 71 between the first master fuel valve 111 described below and the fuel consumer 60, the inside of the fuel consumer 60, and the inside of the return line 72 between the fuel consumer 60 and the catch tank 80.

The catch tank 80 separates the recovered ammonia into an inert gas used as a purge gas described below and vaporized ammonia fuel and liquefied ammonia fuel.

Hereinafter, for convenience of description, the return line 72 connecting the catch tank 80 and the fuel consumer 60 is referred to as a "first return line 72a", and the return line 72 connecting the catch tank 80 and the mixing chamber 30 is referred to as a "second return line 72b".

Therefore, the second main valve 94b, the second heat exchanger 93, and the first valve 95 are provided on the first return line 72a.

The catch tank 80 receives the fuel from the fuel consumer 60 flowing through the first return line 72a and separates the gas component of the fuel. The fuel separated in the catch tank 80 is guided from the catch tank 80 to the mixing chamber 30 through the second return line 72b. The temperature of the fuel flowing in the first return line 72a is higher than the temperature of the fuel flowing in the supply line 71.

The second valve 96 is an on/off valve provided in the second return line 72b. The second valve 96 can be transitioned to a state in which the fuel in the second return line 72b flows from the catch tank 80 toward the mixing chamber 30 or a state in which the fuel does not flow from the catch tank 80 toward the mixing chamber 30. The operation of changing the open and closed state of the second valve 96 is performed manually by the crew member of the floating body 1 or automatically.

The third valve 97 is a flow rate adjustment valve provided on a mixing chamber 30 side with respect to the second valve 96 in the second return line 72b. In a case where the second valve 96 is in the open state, the third valve 97 can adjust the flow rate and pressure of the fuel flowing toward the mixing chamber 30 through the second return line 72b by the opening degree being adjusted. The operation of changing the open and closed state of the third valve 97 is performed manually by the crew member of the floating body 1 or automatically.

### (First fuel preparation room)

The first fuel preparation room 100 in the present embodiment accommodates the fuel device 90 provided on the fuel line 70. The first fuel preparation room 100 is a chamber that is managed so that fuel vaporized in a case where the fuel leaks indoors can be appropriately treated without flowing out to the surroundings.

The first fuel preparation room 100 of the present embodiment is provided on the upper deck 13. The first fuel preparation room 100 accommodates the above-described temperature adjuster 50, mixing chamber 30, and fuel device 90.

In addition, the first fuel preparation room 100 accommodates a part of the connection line 40 on the side close to the mixing chamber 30 and a part of the fuel line 70 on the side close to the mixing chamber 30.

### (Main Gas Fuel Valve)

The main gas fuel valve 110 is an on/off valve provided in the fuel line 70.

The main gas fuel valve 110 in the present embodiment includes the first master fuel valve 111 and a second master fuel valve 112.

The first master fuel valve 111 is provided on the fuel consumer 60 side with respect to the first main valve 94a in the supply line 71. The first master fuel valve 111 can be transitioned to a state in which the fuel in the supply line 71 flows toward the fuel consumer 60 or a state in which the fuel does not flow toward the fuel consumer 60.

The second master fuel valve 112 is provided on the fuel consumer 60 side with respect to the second main valve 94b in the first return line 72a. The second master fuel valve 112 can be transitioned to a state in which the fuel in the first return line 72a flows toward the catch tank 80 or a state in which the fuel does not flow toward the catch tank 80. The operation of changing the open and closed states of the first master fuel valve 111 and the second master fuel valve 112 is performed manually by the crew member of the floating body 1 or automatically.

### (Double Block and Bleed Valve)

The double block and bleed valve 120 is provided in the fuel line 70.

The double block and bleed valve 120 in the present embodiment has a supply side valve 121 that is provided on the fuel consumer 60 side with respect to the first main valve 94a in the supply line 71, and a return side valve 122 that is provided on the fuel consumer 60 side with respect to the second main valve 94b in the first return line 72a.

The supply side valve 121 includes a first shut-off valve 121a (shut-off valve), a first bleed line 121b (bleed line), and a first bleed valve 121c (bleed valve). The first shut-off valve 121a in the present embodiment is an on/off valve, and two first shut-off valves 121a are provided in series in the supply line 71.

The first shut-off valve 121a can be transitioned to a state in which the fuel in the supply line 71 flows toward the fuel consumer 60 or a state in which the fuel does not flow toward the fuel consumer 60. The operation of changing the open and closed state of the first shut-off valve 121a is performed manually by the crew member of the floating body 1 or automatically.

Here, the first master fuel valve 111 described above also serves as the first shut-off valve 121a disposed on a first fuel preparation room 100 side of the two first shut-off valves 121a in the supply line 71.

The first bleed line 121b is a pipe branching from the supply line 71 between the two first shut-off valves 121a. One end of the first bleed line 121b is connected to the supply line 71 between the two first shut-off valves 121a, and the other end of the first bleed line 121b is connected to, for example, the knockout drum 140 provided inside the floating main body 10.

The first bleed valve 121c is an on/off valve provided in the first bleed line 121b. The first bleed valve 121c can be transitioned to a state in which the fuel in the first bleed line 121b flows toward the knockout drum 140 or a state in which the fuel does not flow toward the knockout drum 140.

The first bleed valve 121c is, for example, in a closed state in a case where the first master fuel valve 111 is in an open state, and is in an open state in a case where the first master fuel valve 111 is in a closed state. The operation of changing the open and closed state of the first bleed valve 121c is performed manually by the crew member of the floating body 1 or automatically.

The return side valve 122 includes a second shut-off valve 122a (shut-off valve), a second bleed line 122b (bleed line), and a second bleed valve 122c (bleed valve). The second shut-off valve 122a in the present embodiment is an on/off valve, and two second shut-off valves 122a are provided in series in the first return line 72a. The second shut-off valve 122a can be transitioned to a state in which the fuel in the first return line 72a flows toward the catch tank 80 or a state in which the fuel does not flow toward the catch tank 80.

The operation of changing the open and closed state of the second shut-off valve 122a is performed manually by the crew member of the floating body 1 or automatically.

Here, the second master fuel valve 112 described above also serves as the second shut-off valve 122a disposed on the first fuel preparation room 100 side of the two second shut-off valves 122a in the first return line 72a.

The second bleed line 122b is a pipe branching from the first return line 72a between the two second shut-off valves 122a. One end of the second bleed line 122b is connected to the first return line 72a between the two second shut-off valves 122a, and the other end of the second bleed line 122b is connected to, for example, the knockout drum 140.

The second bleed valve 122c is an on/off valve provided in the second bleed line 122b. The second bleed valve 122c can be transitioned to a state in which the fuel in the second bleed line 122b flows toward the knockout drum 140 or a state in which the fuel does not flow toward the knockout drum 140.

The second bleed valve 122c is, for example, in a closed state in a case where the second master fuel valve 112 is in an open state, and is in an open state in a case where the second master fuel valve 112 is in a closed state. The operation of changing the open and closed state of the second bleed valve 122c is performed manually by the crew member of the floating body 1 or automatically.

### (Adjustment Valve)

The adjustment valve 125 is provided in the first return line 72a on the fuel consumer 60 side with respect to the second shut-off valve 122a disposed on the fuel consumer 60 side in the return side valve 122. The adjustment valve 125 can adjust the flow rate and pressure of the fuel flowing toward the catch tank 80 through the first return line 72a. The operation of changing the open and closed state of the adjustment valve 125 is performed manually by the crew member of the floating body 1 or automatically.

### (Second fuel preparation room)

The second fuel preparation room 130 accommodates at least the main gas fuel valve 110. The second fuel preparation room 130 in the present embodiment accommodates the double block and bleed valve 120 including the main gas fuel valve 110, the adjustment valve 125, and a part of purge equipment 150 described below. In addition, a part of the supply line 71 and a part of the first return line 72a which are provided with the double block and bleed valve 120 are accommodated in the second fuel preparation room 130.

The second fuel preparation room 130 is provided inside the floating main body 10 and is partitioned by, for example, the bulkhead or the like of the floating main body 10. The second fuel preparation room 130 is a chamber that is managed so that fuel vaporized in a case where the fuel leaks indoors can be appropriately treated without flowing out to the surroundings.

Specifically, the second fuel preparation room 130 is disposed on the bow side Fab with respect to the engine room 14 and on the stern side Fas and on the lower side Dvd with respect to the first fuel preparation room 100. That is, the second fuel preparation room 130 is disposed on an engine room 14 side with respect to the first fuel preparation room 100, and is provided to be partitioned from the engine room 14.

The knockout drum 140 is disposed outside the second fuel preparation room 130, for example. In the present embodiment, the ammonia as the fuel recovered in the knockout drum 140 may be introduced into a detoxification device 400 (see Fig. 1), for example, through a detoxification line 280 connecting the knockout drum 140 and the detoxification device 400. The detoxification device 400 is provided on the upper deck 13, for example. In Figs. 2 to 6, the detoxification device 400 is not shown for convenience of the paper surface.

### (Purge Equipment)

The purge equipment 150 can perform purging between the main gas fuel valve 110 and the fuel consumer 60 in the fuel line 70.

The purge equipment 150 includes a purge gas supply source 151, a purge gas supply line 152, a supply purge valve 153, a first outflow line 154 (outflow line), a first purge valve 157, a second outflow line 155, and a second purge valve 156.

The purge gas supply source 151 is a device that generates and pumps the inert gas (purge gas) for purging, which is non-reactive with the fuel. For example, the inert gas in the present embodiment includes a gas such as a nitrogen gas (N₂). For example, the purge gas supply source 151 is provided inside the floating main body 10.

The purge gas supply line 152 is a pipe through which the inert gas flows into the fuel line 70 on the fuel consumer 60 side with respect to the main gas fuel valve 110. The purge gas supply line 152 in the present embodiment connects the purge gas supply source 151 and the fuel line 70.

Specifically, one end of the purge gas supply line 152 is connected to the purge gas supply source 151, and the other end thereof is connected to the supply line 71 on the fuel consumer 60 side with respect to the first shut-off valve 121a on the fuel consumer 60 side in the supply line 71 in the second fuel preparation room 130.

The supply purge valve 153 is an on/off valve provided in the purge gas supply line 152. The supply purge valve 153 can be transitioned to a state in which the inert gas in the purge gas supply line 152 flows toward the fuel line 70 or a state in which the inert gas does not flow toward the fuel line 70.

The supply purge valve 153 is, for example, in an open state in a case where the main gas fuel valve 110 is in a closed state, and is in a closed state in a case where the main gas fuel valve 110 is in an open state. The operation of changing the open and closed state of the supply purge valve 153 is performed manually by the crew member of the floating body 1 or automatically.

The first outflow line 154 is a pipe through which the fuel in the fuel line 70 flows out in a case where the inert gas flows into the fuel line 70 from the purge gas supply line 152. Here, the above-described first bleed line 121b and second bleed line 122b also serve as the first outflow line 154.

Therefore, the first outflow line 154 connects the supply line 71 between the adjacent first shut-off valves 121a disposed on the supply line 71 and the knockout drum 140, and connects the first return line 72a between the adjacent second shut-off valves 122a disposed on the first return line 72a and the knockout drum 140.

The first purge valve 157 is an on/off valve provided in the first outflow line 154. The first purge valve 157 can be transitioned to a state in which the inert gas in the first outflow line 154 flows toward the knockout drum 140 or a state in which the inert gas does not flow toward the knockout drum 140. Here, the above-described first bleed valve 121c and second bleed valve 122c also serve as the first purge valve 157.

The first purge valve 157 is, for example, in an open state in a case where the main gas fuel valve 110 is in a closed state, and is in a closed state in a case where the main gas fuel valve 110 is in an open state. The operation of changing the open and closed state of the first purge valve 157 is performed manually by the crew member of the floating body 1 or automatically.

The second outflow line 155 is a pipe through which the fuel in the fuel line 70 flows out in a case where the inert gas flows into the fuel line 70 from the purge gas supply line 152. One end of the second outflow line 155 is connected to the first return line 72a on the fuel consumer 60 side with respect to the adjustment valve 125, and the other end of the second outflow line 155 is connected to, for example, the knockout drum 140.

The second purge valve 156 is an on/off valve provided in the second outflow line 155. The second purge valve 156 can be transitioned to a state in which the inert gas in the second outflow line 155 flows toward the knockout drum 140 or a state in which the inert gas does not flow toward the knockout drum 140.

The second purge valve 156 is, for example, in an open state in a case where the main gas fuel valve 110 is in a closed state, and is in a closed state in a case where the main gas fuel valve 110 is in an open state. The operation of changing the open and closed state of the second purge valve 156 is performed manually by the crew member of the floating body 1 or automatically.

Hereinafter, an example of purging the fuel in the fuel line 70 via the purge equipment 150 will be described.

In a case where the first master fuel valve 111 and the second master fuel valve 112 of the main gas fuel valve 110 are closed, the first shut-off valve 121a in the supply side valve 121 and the second shut-off valve 122a in the return side valve 122 of the double block and bleed valve 120 are closed.

After the first master fuel valve 111, the second master fuel valve 112, the first shut-off valve 121a, and the second shut-off valve 122a are closed, the first bleed valve 121c (first purge valve 157) and the second bleed valve 122c (first purge valve 157) are opened. Accordingly, the fuel present in the supply line between the first shut-off valves 121a and in the first return line 72a between the second shut-off valves 122a is exhausted to the knockout drum 140 through the first bleed line 121b (first outflow line 154) and through the second bleed line 122b (first outflow line 154).

Next, the first shut-off valve 121a disposed on the fuel consumer 60 side in the supply side valve 121 and the second shut-off valve 122a disposed closest to the fuel consumer 60 side in the return side valve 122 are opened.

Next, the supply purge valve 153 of the purge equipment 150 is opened, the purge gas supply source 151 is driven, and the inert gas flows into the supply line 71 from the purge gas supply source 151 through the purge gas supply line 152. The inert gas that has flowed into the supply line 71 flows through the supply line 71 on the fuel consumer 60 side with respect to the first master fuel valve 111, thereby pushing the fuel in the supply line 71 out to the knockout drum 140 through the first outflow line 154 (first bleed line 121b) connected to the supply line 71.

In addition, the inert gas that has flowed into the supply line 71 flows into the fuel consumer 60. The inert gas that has flowed into the fuel consumer 60 flows into the first return line 72a while pushing the fuel in the fuel consumer 60 out to the first return line 72a.

The inert gas that has flowed into the first return line 72a pushes the fuel pushed out from the fuel consumer 60 to the first return line 72a and the fuel in the first return line 72a out to the knockout drum 140 through the first outflow line 154 (second bleed line 122b) and the second outflow line 155 which are connected to the first return line 72a.

Therefore, the inert gas from the purge gas supply source 151 pushes (purges) the fuel in the fuel line 70 out to the knockout drum 140 through the first outflow line 154 and through the second outflow line 155.

After the inert gas has finished pushing the fuel present in the fuel line out, the first shut-off valve 121a of the supply side valve 121, the second shut-off valve 122a of the return side valve 122, and the second purge valve 156 are closed. That is, the first shut-off valve 121a that is not the first master fuel valve 111 out of the two first shut-off valves 121a is maintained in an open state until the inert gas pushes the fuel in the supply line 71 out to the knockout drum 140. In addition, the second shut-off valve 122a that is not the second master fuel valve 112 out of the two second shut-off valves 122a and the second purge valve 156 are maintained in an open state until the inert gas pushes the fuel in the first return line 72a out to the knockout drum 140.

### (Entry Way Unit)

The entry way unit 160 is an entry way for the crew member of the floating body 1 to enter and exit the second fuel preparation room 130, and is provided in the floating main body 10 outside the engine room 14. The entry way unit 160 in the present embodiment is provided on the upper deck 13 in the vicinity of the superstructure 17. In addition, a door such as an openable and closable watertight door is provided in the entry way unit 160 in the present embodiment.

### (Passage Unit)

The passage unit 170 is a passage between the second fuel preparation room 130 and the entry way unit 160, and connects the second fuel preparation room 130 and the entry way unit 160. The passage unit 170 is provided inside the floating main body 10 outside the engine room 14. The passage unit 170 is partitioned by, for example, the bulkhead or the like of the floating main body 10 and is airtightly isolated from the outside.

The passage unit 170 has, for example, a staircase or the like that allows the crew member of the floating body 1 to move up and down in the up-down direction Dv. Therefore, the crew member of the floating body 1 passing through the entry way unit 160 can access the second fuel preparation room 130 through the passage unit 170.

### (Air Lock Chamber)

The air lock chamber 180 is a chamber for suppressing the outflow of air from the second fuel preparation room 130 through the passage unit 170 and through the entry way unit 160. The air lock chamber 180 is provided in the passage unit 170 between the second fuel preparation room 130 and the entry way unit 160. The air lock chamber 180 exemplified in the present embodiment is disposed in the middle of the passage unit 170. In the air lock chamber 180, an internal pressure is maintained higher than the pressure in the second fuel preparation room 130.

### (First Ventilation Equipment)

The first ventilation equipment 190 can ventilate the air in the first fuel preparation room 100. In addition, the first ventilation equipment 190 can prevent the leakage of the fuel to the outside by stopping the ventilation of the air in the first fuel preparation room 100. In other words, the first ventilation equipment 190 can airtightly isolate the inside of the first fuel preparation room 100 from the outside.

The first ventilation equipment 190 includes a first air supply unit 191 and a first exhaust unit 192.

The first air supply unit 191 can introduce air (atmosphere) outside the first fuel preparation room 100 into the first fuel preparation room 100.

The first air supply unit 191 includes a first air supply port 191a, a first air supply line 191b, and a first air supply damper 191c.

The first air supply port 191a is, for example, an air supply hole formed in a wall surface such as a ceiling of the first fuel preparation room 100. The first air supply line 191b is a pipe (duct) having one end connected to the first air supply port 191a and the other end opened to the atmosphere.

The first air supply damper 191c is provided in the first air supply line 191b. The first air supply damper 191c can adjust the flow rate of the air flowing through the first air supply line 191b by the opening degree being adjusted. In addition, by closing the first air supply damper 191c, it is possible to prevent air from flowing into the first fuel preparation room 100 through the first air supply line 191b. In other words, by closing the first air supply damper 191c, it is possible to prevent air in the first fuel preparation room 100 from flowing out to the outside through the first air supply line 191b.

The first exhaust unit 192 can exhaust the air in the first fuel preparation room 100 to the outside of first fuel preparation room 100.

The first exhaust unit 192 includes a first exhaust port 192a, a first exhaust line 192b, a first exhaust fan 192c, and a first exhaust damper 192d.

The first exhaust port 192a is an exhaust hole formed in a wall surface such as a ceiling of the first fuel preparation room 100. The first exhaust line 192b is a pipe having one end connected to the first exhaust port 192a and the other end opened to, for example, the atmosphere. The first exhaust fan 192c is provided in the first exhaust line 192b. The first exhaust fan 192c is driven to send air in the first fuel preparation room 100 to the atmosphere through the first exhaust port 192a and through the first exhaust line 192b.

The first exhaust damper 192d is provided on a first exhaust port 192a side with respect to the first exhaust fan 192c in the first exhaust line 192b. The first exhaust damper 192d can adjust the flow rate of the air flowing through the first exhaust line 192b by the opening degree being adjusted. In addition, by closing the first exhaust damper 192d, it is possible to prevent air in the first fuel preparation room 100 from flowing out to the outside through the first exhaust line 192b. In other words, by closing the first exhaust damper 192d, it is possible to prevent air from flowing into the first fuel preparation room 100 through the first exhaust line 192b.

### (First Detection Unit)

The first detection unit 193 is a gas sensor that detects the fuel (ammonia) leaked in the first fuel preparation room 100. Specifically, the first detection unit 193 detects whether or not the air in the first fuel preparation room 100 contains the gas-state fuel.

The first detection unit 193 in the present embodiment is an ammonia sensor disposed in the first fuel preparation room 100. In a case where the first detection unit 193 detects that the air contains the fuel, for example, by transmitting a detection signal to a notification device or the like (not shown), the first detection unit 193 notifies the crew member of the floating body 1 that the fuel is leaking in the first fuel preparation room 100.

Therefore, in a case where the fuel is leaking in the first fuel preparation room 100, the first fuel preparation room 100 can be ventilated by the first air supply unit 191, the first exhaust unit 192, and the first detection unit 193 described above via the operation of the crew member of the floating body 1, and the like, or the ventilation can be stopped to prevent the fuel from leaking to the outside and to prevent the air from flowing into the first fuel preparation room 100 from the outside.

### (Second Ventilation Equipment)

The second ventilation equipment 200 can ventilate the air in the second fuel preparation room 130. In addition, the second ventilation equipment 200 can prevent the leakage of the fuel to the outside by stopping the ventilation of the air in the second fuel preparation room 130. In other words, the second ventilation equipment 200 can airtightly isolate the inside of the second fuel preparation room 130 from the outside.

The second ventilation equipment 200 includes a second air supply unit 201 and a second exhaust unit 202.

The second air supply unit 201 can introduce air (atmosphere) outside the second fuel preparation room 130 into the second fuel preparation room 130.

The second air supply unit 201 includes a second air supply port 201a, a second air supply line 201b, and a second air supply damper 201c.

The second air supply port 201a is, for example, an air supply hole formed in a wall surface such as a ceiling of the second fuel preparation room 130. The second air supply line 201b is a pipe (duct) having one end connected to the second air supply port 201a and the other end opened to the atmosphere.

The second air supply damper 201c is provided in the second air supply line 201b. The second air supply damper 201c can adjust the flow rate of the air flowing through the second air supply line 201b by the opening degree being adjusted. In addition, by closing the second air supply damper 201c, it is possible to prevent air from flowing into the second fuel preparation room 130 through the second air supply line 201b. In other words, by closing the second air supply damper 201c, it is possible to prevent air in the second fuel preparation room 130 from flowing out to the outside through the second air supply line 201b.

The second exhaust unit 202 can exhaust the air in the second fuel preparation room 130 to the outside of second fuel preparation room 130.

The second exhaust unit 202 includes a second exhaust port 202a, a second exhaust line 202b, a second exhaust fan 202c, and a second exhaust damper 202d.

The second exhaust port 202a is, for example, an exhaust hole formed in a wall surface such as a ceiling of the second fuel preparation room 130. The second exhaust line 202b is a pipe having one end connected to the second exhaust port 202a and the other end opened to, for example, the atmosphere. The second exhaust fan 202c is provided in the second exhaust line 202b. The second exhaust fan 202c is driven to send air in the second fuel preparation room 130 to the atmosphere through the second exhaust port 202a and through the second exhaust line 202b.

The second exhaust damper 202d is provided on a second exhaust port 202a side with respect to the second exhaust fan 202c in the second exhaust line 202b. The second exhaust damper 202d can adjust the flow rate of the air flowing through the second exhaust line 202b by the opening degree being adjusted. In addition, by closing the second exhaust damper 202d, it is possible to prevent air in the second fuel preparation room 130 from flowing out to the outside through the second exhaust line 202b. In other words, by closing the second exhaust damper 202d, it is possible to prevent air from flowing into the second fuel preparation room 130 through the second exhaust line 202b.

### (Second Detection Unit)

The second detection unit 203 is a gas sensor that detects the fuel (ammonia) leaked in the second fuel preparation room 130. Specifically, the second detection unit 203 detects whether or not the air in the second fuel preparation room 130 contains the gas-state fuel.

The second detection unit 203 in the present embodiment is an ammonia sensor disposed in the second fuel preparation room 130. In a case where the second detection unit 203 detects that the air contains the fuel, for example, by transmitting a detection signal to a notification device or the like (not shown), the second detection unit 203 notifies the crew member of the floating body 1 that the fuel is leaking in the second fuel preparation room 130.

Therefore, in a case where the fuel is leaking in the second fuel preparation room 130, the second fuel preparation room 130 can be ventilated by the second air supply unit 201, the second exhaust unit 202, and the second detection unit 203 described above via the operation of the crew member of the floating body 1, and the like, or the ventilation can be stopped to prevent the fuel from leaking to the outside and to prevent the air from flowing into the second fuel preparation room 130 from the outside.

### (Pipe Chamber)

The pipe chamber 210 is a chamber that accommodates the fuel line 70 that is disposed between the first fuel preparation room 100 and the second fuel preparation room 130. Specifically, the pipe chamber 210 accommodates a part of the supply line 71 between the first main valve 94a and the first master fuel valve 111, and a part of the first return line 72a between the second main valve 94b and the second master fuel valve 112.

The pipe chamber 210 is disposed inside the floating main body 10 and is partitioned by, for example, the bulkhead or the like of the floating main body 10. The pipe chamber 210 is airtightly isolated from the outside. The pipe chamber 210 in the present embodiment is disposed adjacent to the second fuel preparation room 130 on the bow side Fab with respect to the second fuel preparation room 130.

### (First Outer Pipe Unit)

The first outer pipe unit 220 is a pipe that covers the fuel line 70 between the first fuel preparation room 100 and the second fuel preparation room 130 from the outer side. Specifically, the first outer pipe unit 220 covers each of the supply line 71 and the first return line 72a which extend between the first fuel preparation room 100 and the second fuel preparation room 130 from the outer side. Therefore, the first outer pipe unit 220 constitutes the double pipe together with the supply line 71 and with the first return line 72a.

Hereinafter, for convenience of description, the first outer pipe unit 220 that constitutes the double pipe together with the supply line 71 is referred to as a "supply side outer pipe 221", and the first outer pipe unit 220 that constitutes the double pipe together with the first return line 72a is referred to as a "return side outer pipe 222".

A gap (space) is formed between the supply side outer pipe 221 and the supply line 71 and between the return side outer pipe 222 and the first return line 72a. The inside of the first outer pipe unit 220 and the inside of the second fuel preparation room 130 communicate with each other through the connection pipe unit 223. The connection pipe unit 223 is provided over the supply side outer pipe 221 and the return side outer pipe 222 on a second fuel preparation room 130 side in the pipe chamber 210.

### (Second Outer Pipe Unit)

The second outer pipe unit 230 is a pipe that covers the fuel line 70 between the second fuel preparation room 130 and the fuel consumer 60 in the engine room 14 from the outer side. Specifically, the second outer pipe unit 230 covers each of the supply line 71 and the first return line 72a which extend between the second fuel preparation room 130 and the fuel consumer 60 from the outer side. Therefore, the second outer pipe unit 230 constitutes the double pipe together with the supply line 71 and with the first return line 72a.

The air present in the space between the second outer pipe unit 230 and the supply line 71 and in the space between the second outer pipe unit 230 and the first return line 72a may be ventilated by individual ventilation equipment (not shown) provided in the second outer pipe unit 230.

In addition, the inside of the second outer pipe unit 230 and the inside of the second fuel preparation room 130 may be communicated with each other, and the air in the second outer pipe unit 230 may be ventilated by guiding the air in the second outer pipe unit 230 into the second fuel preparation room 130.

In addition, instead of the ventilation equipment, a medium (gas) having a higher pressure than that of the supply line 71 and than that of the first return line 72a may be supplied into the space between the second outer pipe unit 230 and the supply line 71 and into the space between the second outer pipe unit 230 and the first return line 72a by a gas supply device (not shown), in the second outer pipe unit 230.

Hereinafter, for convenience of description, a space between the second outer pipe unit 230 and the supply line 71 is referred to as a "first supply side space", and a space between the second outer pipe unit 230 and the first return line 72a is referred to as a "first return side space".

In other words, the medium may be pressurized and supplied to each of the first supply side space and the first return side space to prevent leakage to the outside. In this case, for example, nitrogen gas can be used as the medium.

In this case, the pressure in the first supply side space and in the first return side space may be made higher than the pressure in the supply line 71 and in the first return line 72a.

### (Outer Pipe Ventilation Equipment)

The outer pipe ventilation equipment 240 ventilates the air in the first outer pipe unit 220. The outer pipe ventilation equipment 240 includes an outer pipe air supply unit 241 and an outer pipe exhaust unit 242.

The outer pipe air supply unit 241 introduces air (atmosphere) outside the first outer pipe unit 220 into the first outer pipe unit 220.

The outer pipe air supply unit 241 includes an outer pipe air supply port 241a, an outer pipe air supply line 241b, and an outer pipe air supply damper 241c.

The outer pipe air supply port 241a is an air supply hole formed in the return side outer pipe 222. The outer pipe air supply port 241a in the present embodiment is disposed in the return side outer pipe 222 outside the pipe chamber 210. The outer pipe air supply line 241b is a pipe having one end connected to the outer pipe air supply port 241a and the other end opened to the atmosphere.

The outer pipe air supply damper 241c is a damper provided in the outer pipe air supply line 241b. By setting the outer pipe air supply damper 241c to the open state, the air flowing in the outer pipe air supply line 241b can flow into the inside of the return side outer pipe 222, that is, the gap (space) between the return side outer pipe 222 and the first return line 72a. The outer pipe air supply damper 241c may be, for example, an on/off valve instead of the damper configuration.

The outer pipe exhaust unit 242 exhausts the air in the first outer pipe unit 220 to the outside of the first outer pipe unit 220. The outer pipe exhaust unit 242 includes an outer pipe exhaust port 242a, an outer pipe exhaust line 242b, an outer pipe exhaust fan 242c, and an outer pipe exhaust damper 242d.

The outer pipe exhaust port 242a is an exhaust hole formed in the supply side outer pipe 221. The outer pipe exhaust port 242a in the present embodiment is disposed in the supply side outer pipe 221 outside the pipe chamber 210. The outer pipe exhaust line 242b is a pipe having one end connected to the outer pipe exhaust port 242a and the other end opened to, for example, the atmosphere. The outer pipe exhaust fan 242c is provided in the outer pipe exhaust line 242b. The outer pipe exhaust fan 242c is driven to send atmosphere in the first outer pipe unit 220 to the atmosphere through the outer pipe exhaust port 242a and through the outer pipe exhaust line 242b.

The outer pipe exhaust damper 242d is a damper provided on an outer pipe exhaust port 242a side with respect to the outer pipe exhaust fan 242c in the outer pipe exhaust line 242b. The outer pipe exhaust damper 242d is maintained in, for example, the same open and closed state as the outer pipe air supply damper 241c. The outer pipe exhaust damper 242d may be, for example, an on/off valve instead of the damper configuration.

Therefore, in a case where the outer pipe exhaust fan 242c is driven, the air introduced into the return side outer pipe 222 through the outer pipe air supply unit 241 flows in the return side outer pipe 222 to the second fuel preparation room 130 side, flows into the connection pipe unit 223, and then flows into the supply side outer pipe 221.

The air that flows into the supply side outer pipe 221 through the connection pipe unit 223 flows through the gap (space) between the supply side outer pipe 221 and the supply line 71 in the supply side outer pipe 221 to the first fuel preparation room 100 side, and then flows out to the outside through the outer pipe exhaust unit 242. As a result, the first outer pipe unit 220 can be ventilated.

Instead of the outer pipe ventilation equipment 240, a medium (gas) having a higher pressure than that of the space between the return side outer pipe 222 and the first return line 72a, than that in the connection pipe unit 223, and than that of the space between the supply side outer pipe 221 and the supply line 71 may be supplied into the first outer pipe unit 220 by the gas supply device (not shown).

Hereinafter, for convenience of description, a space between the return side outer pipe 222 and the first return line 72a is referred to as a "second return side space", and a space between the supply side outer pipe 221 and the supply line 71 is referred to as a "second supply side space".

In other words, the medium may be pressurized and supplied to each of the second return side space, the space in the connection pipe unit 223, and the second supply side space to prevent leakage to the outside. In this case, for example, nitrogen gas can be used as the medium.

In this case, the pressure in the second return side space, in the space in the connection pipe unit 223, and in the supply side space may be made higher than the pressure in the first return line 72a and in the supply line 71.

### (Operations and Effects)

In a case where the operation of the floating body 1 is stopped for a long period of time or in a case where the fuel is switched from the liquefied gas to the heavy oil during the operation of the floating body 1, the liquefied gas present in the fuel line 70 on the fuel consumer 60 side with respect to the main gas fuel valve 110 may be purged.

In the above configuration, the main gas fuel valve 110 is accommodated in the second fuel preparation room 130 that is disposed on the engine room 14 side with respect to the first fuel preparation room 100 and that is provided to be partitioned from the engine room 14. Accordingly, since the main gas fuel valve 110 that needs to be disposed outside the engine room 14 can be disposed closer to the engine room 14, for example, a region in the fuel line 70 to be purged can be smaller than that in a configuration in which the main gas fuel valve 110 is accommodated in the first fuel preparation room 100. Therefore, it is possible to suppress an increase in the amount of fuel to be purged, and as a result, it is possible to suppress energy loss. In addition, the size of the purge equipment 150 and of the detoxification device 400 can be suppressed from increasing.

In addition, in the above configuration, the entry way unit 160 and the passage unit 170 are provided outside the engine room 14. Accordingly, the air in the second fuel preparation room 130 does not flow out into the engine room 14 through the passage unit 170 and through the entry way unit 160. In addition, with the above configuration, since the air lock chamber 180 is provided in the passage unit 170, it is possible to suppress the air containing the fuel from flowing out from the entry way unit 160 through the entry way unit 160 even in a case where the fuel leaks in the second fuel preparation room 130. Therefore, the fuel that leaks and vaporizes in the second fuel preparation room 130 can be retained on the second fuel preparation room 130 side with respect to the air lock chamber 180.

In addition, in the above configuration, the double block and bleed valve 120 is disposed on the fuel line 70. Accordingly, it is possible to suppress the fuel in the fuel line 70 on the first fuel preparation room 100 side with respect to the shut-off valves (first shut-off valve 121a and second shut-off valve 122a) of the double block and bleed valve 120 from flowing to the fuel consumer 60 side. Further, since the main gas fuel valve 110 also serves as the shut-off valve that is disposed closest to the first fuel preparation room 100 side among the shut-off valves of the double block and bleed valve 120, it is possible to suppress an increase in the number of components of the floating body 1.

In addition, in the above configuration, the bleed lines (first bleed line 121b and second bleed line 122b) of the double block and bleed valve 120 also serve as the first outflow line 154 of the purge equipment 150. As a result, it is possible to further suppress an increase in the number of components of the floating body 1.

In addition, with the above configuration, since the double block and bleed valve 120 is disposed in the second fuel preparation room 130, the maintainability of the main gas fuel valve 110 and of the double block and bleed valve 120 can be improved.

In addition, the floating body 1 includes the second detection unit 203 that detects the fuel leaked in the second fuel preparation room 130, and the second ventilation equipment 200 that ventilates the second fuel preparation room 130. Accordingly, even in a case where the fuel leaks in the second fuel preparation room 130, the second fuel preparation room 130 can be ventilated, so that the fuel that has leaked and vaporized in the second fuel preparation room 130 can be appropriately treated.

### <Second Embodiment>

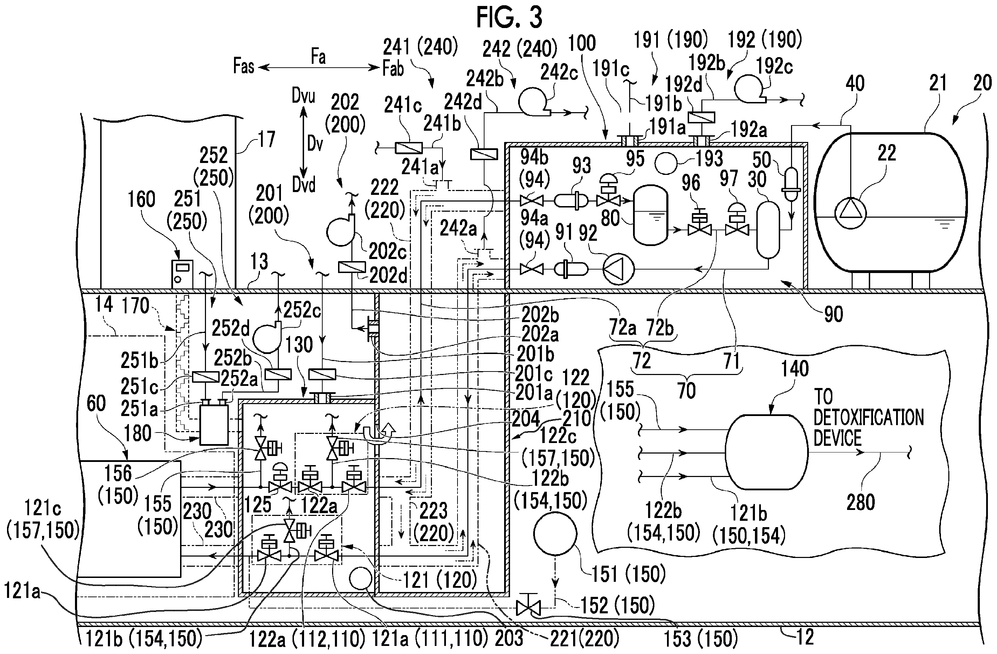

Next, a second embodiment of the floating body 1 according to the present disclosure will be described with reference Fig. 3. In the second embodiment described below, the same reference numerals will be assigned to configurations common to those of the above-described first embodiment in the drawings, and description thereof will be omitted. In the second embodiment, the configuration of the second ventilation equipment 200 is different from the configuration of the second ventilation equipment 200 described in the first embodiment. In addition, the floating body 1 in the second embodiment further includes air lock chamber ventilation equipment 250.

### (Second Ventilation Equipment)

The second ventilation equipment 200 includes a second air supply unit 201 and a second exhaust unit 202. Here, in the second fuel preparation room 130, a communication hole 204 through which the inside of the second fuel preparation room 130 and the inside of the pipe chamber 210 communicate with each other is formed.

The second exhaust unit 202 includes a second exhaust port 202a, a second exhaust line 202b, a second exhaust fan 202c, and a second exhaust damper 202d.

The second exhaust port 202a is an exhaust hole formed in the pipe chamber 210. The second exhaust line 202b is a pipe having one end connected to the second exhaust port 202a and the other end opened to, for example, the atmosphere.

The second exhaust fan 202c is provided in the second exhaust line 202b. The second exhaust fan 202c is driven to send air in the pipe chamber 210 to the atmosphere through the second exhaust port 202a provided in the pipe chamber 210 and through the second exhaust line 202b. That is, by driving the second exhaust fan 202c, the air in the second fuel preparation room 130 is moved into the pipe chamber 210 through the communication hole 204 and is guided to the second exhaust line 202b through the second exhaust port 202a.

The second exhaust damper 202d is provided on a second exhaust port 202a side with respect to the second exhaust fan 202c in the second exhaust line 202b. The second exhaust damper 202d can adjust the flow rate of the air flowing through the second exhaust line 202b by the opening degree being adjusted.

### (Air Lock Chamber Ventilation Equipment)

The air lock chamber ventilation equipment 250 can ventilate the air in the air lock chamber 180.

The air lock chamber ventilation equipment 250 includes an air lock chamber air supply unit 251 and an air lock chamber exhaust unit 252.

The air lock chamber air supply unit 251 can introduce air (atmosphere) outside the air lock chamber 180 into the air lock chamber 180.

The air lock chamber air supply unit 251 includes an air lock chamber air supply port 251a, an air lock chamber air supply line 251b, and an air lock chamber air supply damper 251c.

The air lock chamber air supply port 251a is an air supply hole formed in the air lock chamber 180. The air lock chamber air supply line 251b is a pipe (duct) having one end connected to the air lock chamber air supply port 251a and the other end opened to the atmosphere. The air lock chamber air supply damper 251c is provided in the air lock chamber air supply line 251b. The air lock chamber air supply damper 251c can adjust the flow rate of the air flowing through the air lock chamber air supply line 251b by the opening degree being adjusted.

The air lock chamber exhaust unit 252 can exhaust the air in the air lock chamber 180 to the outside of the air lock chamber 180.

The air lock chamber exhaust unit 252 includes an air lock chamber exhaust port 252a, an air lock chamber exhaust line 252b, an air lock chamber exhaust fan 252c, and an air lock chamber exhaust damper 252d.

The air lock chamber exhaust port 252a is an exhaust hole formed in the air lock chamber 180. The air lock chamber exhaust line 252b is a pipe having one end connected to the air lock chamber exhaust port 252a and the other end opened to, for example, the atmosphere.

The air lock chamber exhaust fan 252c is provided in the air lock chamber exhaust line 252b. The air lock chamber exhaust fan 252c is driven to send air in the air lock chamber 180 to the atmosphere through the air lock chamber exhaust port 252a and through the air lock chamber exhaust line 252b.

The air lock chamber exhaust damper 252d is provided on an air lock chamber exhaust port 252a side with respect to the air lock chamber exhaust fan 252c in the air lock chamber exhaust line 252b. The air lock chamber exhaust damper 252d can adjust the flow rate of the air flowing through the air lock chamber exhaust line 252b by the opening degree being adjusted.

### (Operations and Effects)

With the above configuration, the air in the second fuel preparation room 130 can be guided into the pipe chamber 210 by driving the second exhaust fan 202c, and the air guided from the inside of the pipe chamber 210 can be exhausted through the second exhaust line 202b. Therefore, even in a case where the fuel leaks in the second fuel preparation room 130, the second fuel preparation room 130 and the pipe chamber 210 can be ventilated by guiding the air in the second fuel preparation room 130 into the pipe chamber 210 while reducing the concentration of the fuel contained in the air in the second fuel preparation room 130. That is, the fuel that leaks and vaporizes in the second fuel preparation room 130 can be appropriately treated.

In addition, in a case where the fuel leaks in the second fuel preparation room 130, the air in the second fuel preparation room 130 may move into the air lock chamber 180 through the passage unit 170. With the above configuration, even in a case where the fuel leaks in the second fuel preparation room 130, the air lock chamber 180 can be ventilated. That is, the fuel that flows into the air lock chamber 180 from the inside of the second fuel preparation room 130 can be appropriately treated.

### <Third Embodiment>

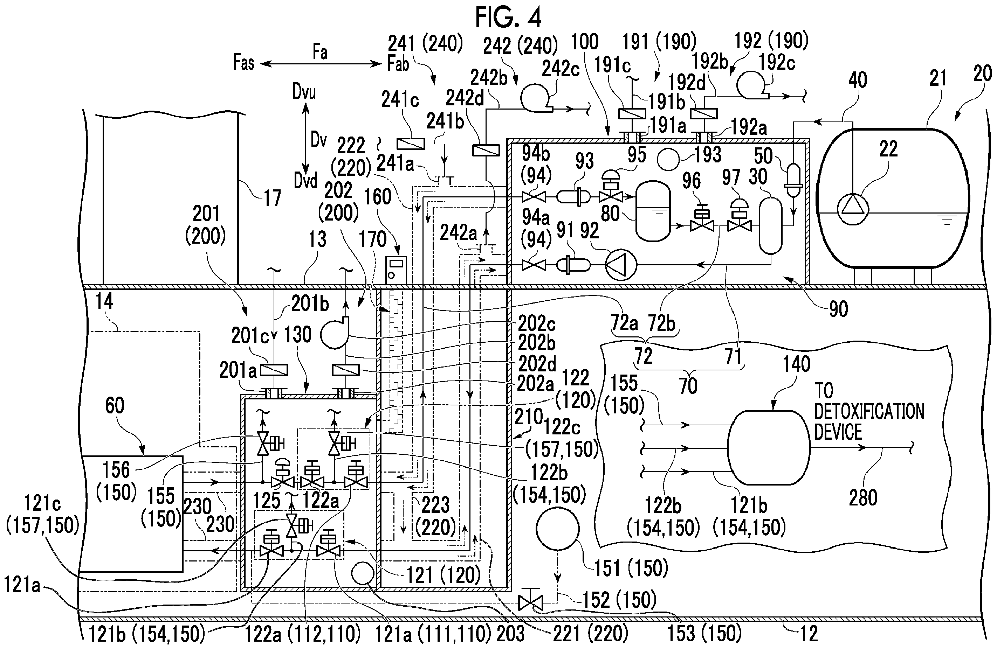

Next, a third embodiment of the floating body 1 according to the present disclosure will be described with reference Fig. 4. In the third embodiment described below, the same reference numerals will be assigned to configurations common to those of the above-described first embodiment in the drawings, and description thereof will be omitted. In the third embodiment, the configurations of the entry way unit 160 and the passage unit 170 are different from the configurations of the entry way unit 160 and the passage unit 170 described in the first embodiment.

### (Entry Way Unit)

The entry way unit 160 in the present embodiment is provided on the upper deck 13 of the pipe chamber 210 on the upper side Dvu.

### (Passage Unit)

The passage unit 170 in the present embodiment is disposed in the pipe chamber 210. The passage unit 170 connects the second fuel preparation room 130 and the entry way unit 160. The passage unit 170 has, for example, a staircase or the like that allows the crew member of the floating body 1 to move up and down in the up-down direction Dv.

The passage unit 170 in the present embodiment is not partitioned by the bulkhead or the like of the floating main body 10 and is exposed in the pipe chamber 210. In other words, the pipe chamber 210 also serves as the passage unit 170.

### (Operations and Effects)

With the above configuration, since the pipe chamber 210 also serves as the passage unit 170, it is not necessary to separately provide the passage unit 170 that extends from the entry way unit 160 to the second fuel preparation room 130, outside the pipe chamber 210. Therefore, a space in the floating main body 10 can be effectively used, and as a result, an increase in size of the floating main body 10 can be suppressed.

### <Fourth Embodiment>

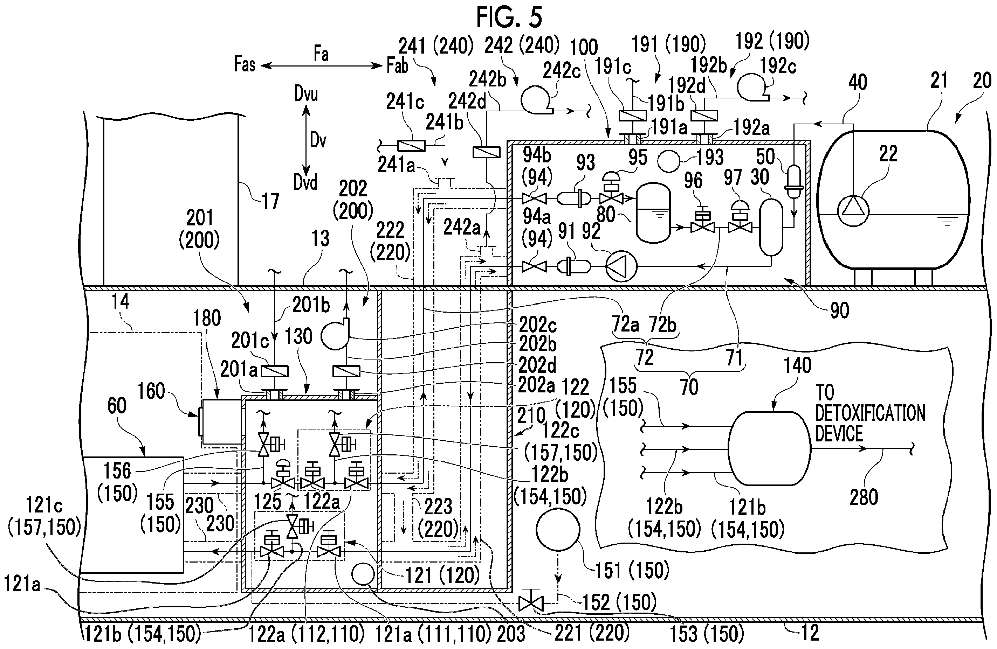

Next, a fourth embodiment of the floating body 1 according to the present disclosure will be described with reference Fig. 5. In the fourth embodiment described below, the same reference numerals will be assigned to configurations common to those of the above-described first embodiment in the drawings, and description thereof will be omitted. In the third embodiment, the configurations of the entry way unit 160 and the air lock chamber 180 are different from the configurations of the entry way unit 160 and the air lock chamber 180 described in the first embodiment. In addition, the floating body 1 in the fourth embodiment does not include the passage unit 170.

### (Entry Way Unit)

The entry way unit 160 in the present embodiment is an entry way of the second fuel preparation room 130 provided in the engine room 14.

### (Air Lock Chamber)

The air lock chamber 180 is a chamber for suppressing the outflow of air from the second fuel preparation room 130 through the entry way unit 160. The air lock chamber 180 is provided between the second fuel preparation room 130 and the entry way unit 160. The entry way unit 160 and the second fuel preparation room 130 in the present embodiment are connected by the air lock chamber 180.

### (Operations and Effects)

With the above configuration, since the air lock chamber 180 is provided between the entry way unit 160 provided in the engine room 14 and the second fuel preparation room 130, it is possible to suppress the air containing the fuel from flowing out to the engine room 14 through the entry way unit 160 even in a case where the fuel leaks in the second fuel preparation room 130.

Therefore, it is possible to retain the fuel that has leaked and vaporized in the second fuel preparation room 130 on the second fuel preparation room 130 side with respect to the air lock chamber 180 while easily allowing the crew member of the floating body 1 to access the second fuel preparation room 130 from the engine room 14.

### (Other Embodiments)

The embodiment of the present disclosure has been described in detail above with reference to the drawings. However, a specific configuration is not limited to the configuration of the embodiment, and additions, omissions, and substitutions of components and other modifications can be made without departing from the scope of the present disclosure.

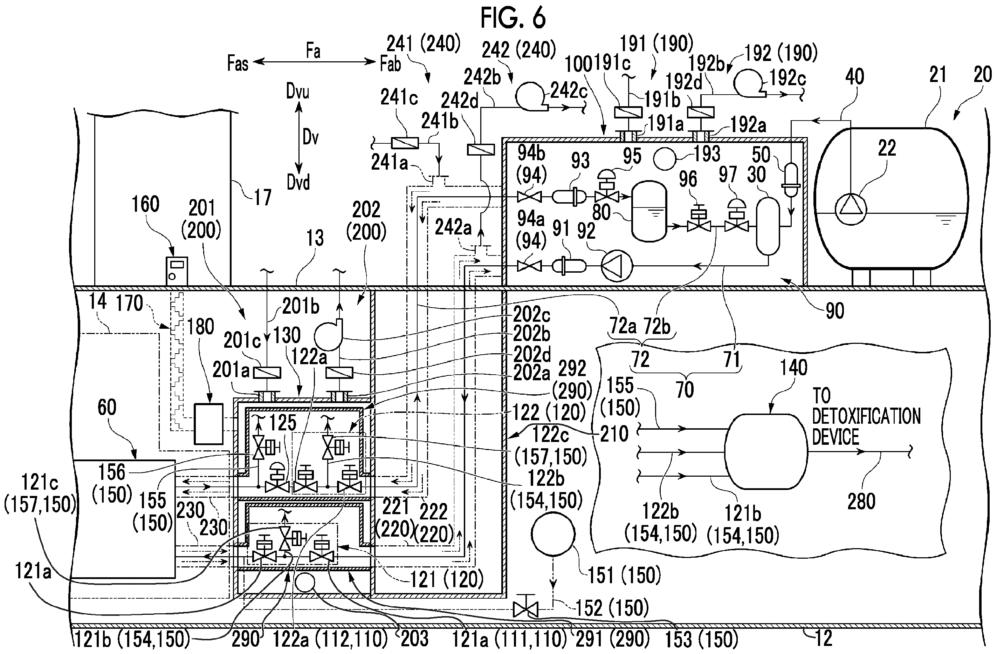

As shown in Fig. 6, the floating body 1 may further include an enclosure 290 that accommodates the double block and bleed valve 120, the adjustment valve 125, the second outflow line 155 and the second purge valve 156 of the purge equipment 150, and the fuel line 70 and that is airtightly isolated from the outside in the second fuel preparation room 130, in the second fuel preparation room 130. That is, the enclosure 290 airtightly isolates the inner side and the outer side of the enclosure 290 in the second fuel preparation room 130. Hereinafter, the configuration of the enclosure 290 will be described.

The enclosure 290 is connected to an inner wall of the second fuel preparation room 130 by, for example, a double pipe. In this case, the second detection unit 203 may be disposed in the second fuel preparation room 130 outside the enclosure 290.

The enclosure 290 has a first enclosure 291 that accommodates the supply side valve 121 and the supply line 71 in the second fuel preparation room 130, and a second enclosure 292 that accommodates the return side valve 122, the adjustment valve 125, the second outflow line 155, the second purge valve 156, and the first return line 72a in the second fuel preparation room 130.

The space (the second supply side space) between the supply side outer pipe 221 and the supply line 71 and the inside of the first enclosure 291 in the second fuel preparation room 130 are communicated with each other through a communication hole or the like into which the supply line 71 formed in the side wall or the like of the second fuel preparation room 130 is inserted. In addition, the space (the first supply side space) between the second outer pipe unit 230 and the supply line 71 and the inside of the first enclosure 291 in the second fuel preparation room 130 are communicated with each other through the communication hole or the like into which the supply line 71 formed in the side wall or the like of the second fuel preparation room 130 is inserted. In addition, the space between the second outer pipe unit 230 and the supply line 71 and the inside of the fuel consumer 60 communicate with each other.

The space (the second return side space) between the return side outer pipe 222 and the first return line 72a and the inside of the second enclosure 292 in the second fuel preparation room 130 are communicated with each other through a communication hole or the like into which the first return line 72a formed in the side wall or the like of the second fuel preparation room 130 is inserted. In addition, the space (the first return side space) between the second outer pipe unit 230 and the first return line 72a and the inside of the second enclosure 292 in the second fuel preparation room 130 are communicated with each other through the communication hole or the like into which the first return line 72a formed in the side wall or the like of the second fuel preparation room 130 is inserted. In addition, the space between the second outer pipe unit 230 and the first return line 72a and the inside of the fuel consumer 60 communicate with each other.

Here, the floating body 1 does not include the connection pipe unit 223 that connects the supply side outer pipe 221 and the return side outer pipe 222 of the first outer pipe unit 220. That is, the supply side outer pipe 221 and the return side outer pipe 222 do not communicate with each other in the pipe chamber 210. Hereinafter, the aspect of ventilation inside the first outer pipe unit 220, inside the enclosure 290, and inside the second outer pipe unit 230 via the outer pipe ventilation equipment 240 will be described.

In a case where the outer pipe exhaust fan 242c of the outer pipe exhaust unit 242 in the outer pipe ventilation equipment 240 is driven, air is introduced into the return side outer pipe 222 through the outer pipe air supply port 241a of the outer pipe air supply unit 241. The air introduced into the return side outer pipe 222 flows in the return side outer pipe 222 to the second fuel preparation room 130 side, flows into the second enclosure 292 in the second fuel preparation room 130, and then flows into the second outer pipe unit 230 forming the double pipe with the first return line 72a.

The air that flows into the second outer pipe unit 230 forming the double pipe together with the first return line 72a flows into the fuel consumer 60, flows in the fuel consumer 60, and flows into the second outer pipe unit 230 forming the double pipe together with the supply line 71. The air that flows into the second outer pipe unit 230 forming the double pipe together with the supply line 71 flows into the first enclosure 291 in the second fuel preparation room 130 and then flows into the supply side outer pipe 221. The air that has flowed into the supply side outer pipe 221 flows in the supply side outer pipe 221 toward the first fuel preparation room 100 side and is exhausted to the atmosphere through the outer pipe exhaust port 242a and the outer pipe exhaust line 242b of the outer pipe exhaust unit 242.

The floating body 1 may be provided with a third outer pipe unit (not shown) that constitutes a double pipe together with the fuel line 70 in the second fuel preparation room 130, instead of the enclosure 290.

The description of the configuration shown in Fig. 6 is given above.

In addition, in the floating body 1 described in the first embodiment and in the second embodiment, the air lock chamber 180 need not be provided as long as the entry way unit 160 is provided on the upper deck 13.

In addition, the connection location between the purge gas supply line 152 and the fuel line 70 described in the above embodiment is not limited to the above. The other end of the above-described purge gas supply line 152 may be connected to an appropriate location as long as the location is on the fuel line 70 on the fuel consumer 60 side with respect to the main gas fuel valve 110. In addition, the purge equipment 150 may include a plurality of the purge gas supply lines 152 and the supply purge valve 153 provided in each of the plurality of purge gas supply lines 152.

In addition, the number of the first shut-off valves 121a of the supply side valve 121 and the number of the second shut-off valves 122a of the return side valve 122 in the double block and bleed valve 120 described in the above embodiment are not limited to the above numbers, and an appropriate number of the first shut-off valves 121a and of the second shut-off valves 122a may be provided on the fuel line 70.

In addition, the first master fuel valve 111 described in the above embodiment need not serve as the first shut-off valve 121a, and the second master fuel valve 112 need not serve as the second shut-off valve 122a. In this case, the first master fuel valve 111 needs only be disposed on the supply line 71 on the first fuel preparation room 100 side with respect to the first shut-off valve 121a of the supply side valve 121 that is disposed closest to the first fuel preparation room 100 side, and the second master fuel valve 112 needs only be disposed on the first return line 72a on the first fuel preparation room 100 side with respect to the second shut-off valve 122a of the return side valve 122 that is disposed closest to the first fuel preparation room 100 side.

In addition, the double block and bleed valve 120 described in the above embodiment need not be accommodated in the second fuel preparation room 130. In this case, at least the main gas fuel valve 110 needs only be accommodated in the second fuel preparation room 130.

In addition, the mixing chamber 30 described in the above embodiment is not limited to the tank. Instead of the tank, the mixing chamber 30 may be, for example, a joint portion of pipes where the fuel from the fuel tank 20 branches in a plurality of directions. In addition, the floating body 1 described in the above embodiment need not include the mixing chamber 30 and the connection line 40. In this case, both the supply line 71 and the second return line 72b need only be directly connected to the fuel tank 20, and the temperature adjuster 50 needs only be disposed on the supply line 71.

In addition, the inert gas described in the above embodiment is not limited to the nitrogen gas. The inert gas may be, for example, argon gas (Ar) having non-reactivity with the liquefied gas.

In addition, the floating body 1 described in the above embodiment need not include the first outer pipe unit 220.

In addition, in the embodiment described above, the fuel tank 20 has been described as an example of the tank that stores the fuel. However, the tank that stores the fuel is not limited to the fuel tank 20 dedicated to fuel. For example, the tank that stores the fuel may be a tank (cargo tank) that stores the liquefied gas as the cargo disposed in the cargo hold or the like in the floating main body 10.

In addition, the floating body 1 described in the above embodiment is the ship that uses the ammonia as the fuel. However, the fuel is not limited the ammonia. The floating body 1 may use liquefied gas such as LNG or LPG as fuel. In addition, the floating body 1 is not limited to the ship, and may be a Floating Storage Regasification Unit (FSRU) or Floating Storage Unit (FSU) instead of the ship.

### <Additional Notes>

For example, the floating body described in each of the embodiments is understood as follows.
(1) A floating body 1 according to a first aspect includes a floating main body 10, a tank which is provided in the floating main body 10 and in which a liquefied gas as fuel is stored, a fuel consumer 60 which is driven by the fuel and is disposed in an engine room 14 of the floating main body 10, a fuel line 70 which connects the fuel consumer 60 and the tank, a first fuel preparation room 100 in which a fuel device 90 provided on the fuel line 70 is accommodated, a second fuel preparation room 130 in which a main gas fuel valve 110 provided on the fuel line 70 is accommodated and which is provided to be partitioned from the engine room 14 on an engine room 14 side with respect to the first fuel preparation room 100, and purge equipment 150 which is capable of performing purging between the main gas fuel valve 110 and the fuel consumer 60 in the fuel line 70.

Accordingly, a region in the fuel line 70 to be purged can be made smaller than that in a configuration in which the main gas fuel valve 110 is accommodated in the first fuel preparation room 100.

(2) A floating body 1 according to a second aspect is the floating body 1 according to the first aspect, and may further include an entry way unit 160 that is provided outside the engine room 14, and a passage unit 170 that is provided outside the engine room 14 and connects the second fuel preparation room 130 and the entry way unit 160.

Accordingly, the air in the second fuel preparation room 130 does not flow out into the engine room 14 through the passage unit 170 and through the entry way unit 160.

(3) A floating body 1 according to a third aspect is the floating body 1 according to the second aspect, and may further include a pipe chamber 210 that accommodates a fuel line 70 of the fuel line 70 that is disposed between the first fuel preparation room 100 and the second fuel preparation room 130, in which the pipe chamber 210 may also serve as the passage unit 170.

Accordingly, it is not necessary to separately provide the passage unit 170 that extends from the entry way unit 160 to the second fuel preparation room 130, outside the pipe chamber 210.

(4) A floating body 1 according to a fourth aspect is the floating body 1 according to any one of the first to third aspects, and may further include an entry way unit 160 that is provided in the engine room 14, and an air lock chamber 180 which is provided between the second fuel preparation room 130 and the entry way unit 160 and in which an internal pressure is maintained higher than a pressure in the second fuel preparation room 130.

Accordingly, it is possible to suppress the air in the second fuel preparation room 130 from flowing out into the engine room 14 through the entry way unit 160.

(5) A floating body 1 according to a fifth aspect is the floating body 1 according to any one of the first to fourth aspects, and may further include a double block and bleed valve 120 including a plurality of shut-off valves (first shut-off valve 121a, second shut-off valve 122a) provided in the fuel line 70, a bleed line (first bleed line 121b, second bleed line 122b) branching from the fuel line 70 between the plurality of shut-off valves, and a bleed valve provided in the bleed line, in which the main gas fuel valve 110 may also serve as a shut-off valve disposed closest to a first fuel preparation room 100 side among the plurality of shut-off valves of the double block and bleed valve 120.

Accordingly, it is possible to suppress an increase in the number of components of the floating body 1 while suppressing the fuel in the fuel line 70 on the first fuel preparation room 100 side with respect to the shut-off valve from flowing to the fuel consumer 60 side.

(6) A floating body 1 according to a sixth aspect is the floating body 1 according to the fifth aspect, in which the purge equipment 150 may include a purge gas supply line 152 through which an inert gas flows into a fuel line 70 on a fuel consumer 60 side with respect to the main gas fuel valve 110, and an outflow line through which the fuel in the fuel line 70 flows out in a case where the inert gas flows into the fuel line 70 from the purge gas supply line 152, and the bleed line may also serve as the outflow line.

As a result, it is possible to further suppress an increase in the number of components of the floating body 1.

(7) A floating body 1 according to a seventh aspect is the floating body 1 according to any one of the first to sixth aspects, and may further include a detection unit (second detection unit 203) that detects fuel leaked in the second fuel preparation room 130, and ventilation equipment (second ventilation equipment 200) that ventilates the second fuel preparation room 130.

Accordingly, even in a case where the fuel leaks in the second fuel preparation room 130, the second fuel preparation room 130 can be ventilated. That is, the fuel that leaks and vaporizes in the second fuel preparation room 130 can be appropriately treated.

### Reference Signs List

1: floating body
10: floating main body
14: engine room
20: fuel tank
40: connection line
60: fuel consumer
70: fuel line
90: fuel device
100: first fuel preparation room
110: main gas fuel valve
111: first master fuel valve
112: second master fuel valve
120: double block and bleed valve
121a: first shut-off valve
121b: first bleed line
121c: first bleed valve
122a: second shut-off valve
122b: second bleed line
122c: second bleed valve
130: second fuel preparation room
150: purge equipment
152: purge gas supply line
154: first outflow line
155: second outflow line
160: entry way unit
170: passage unit
180: air lock chamber
190: first ventilation equipment
193: first detection unit
200: second ventilation equipment
203: second detection unit
210: pipe chamber
240: outer pipe ventilation equipment
250: air lock chamber ventilation equipment

## Claims

1. A floating body comprising:
a floating main body;
a tank which is provided in the floating main body and in which a liquefied gas as fuel is stored;
a fuel consumer which is driven by the fuel and is disposed in an engine room of the floating main body;
a fuel line which connects the fuel consumer and the tank;
a first fuel preparation room in which a fuel device provided on the fuel line is accommodated;
a second fuel preparation room in which a main gas fuel valve provided on the fuel line is accommodated and which is provided to be partitioned from the engine room on an engine room side with respect to the first fuel preparation room; and
purge equipment which is capable of performing purging between the main gas fuel valve and the fuel consumer in the fuel line.

2. The floating body according to Claim 1, further comprising:
an entry way unit that is provided outside the engine room; and
a passage unit that is provided outside the engine room and connects the second fuel preparation room and the entry way unit.

3. The floating body according to Claim 2, further comprising:
a pipe chamber that accommodates a fuel line of the fuel line that is disposed between the first fuel preparation room and the second fuel preparation room,
wherein the pipe chamber also serves as the passage unit.

4. The floating body according to Claim 1 or 2, further comprising:
an entry way unit that is provided in the engine room; and
an air lock chamber which is provided between the second fuel preparation room and the entry way unit and in which an internal pressure is maintained higher than a pressure in the second fuel preparation room.

5. The floating body according to any one of Claims 1 to 3, further comprising:
a double block and bleed valve including a plurality of shut-off valves provided in the fuel line, a bleed line branching from the fuel line between the plurality of shut-off valves, and a bleed valve provided in the bleed line,
wherein the main gas fuel valve also serves as a shut-off valve disposed closest to a first fuel preparation room side among the plurality of shut-off valves of the double block and bleed valve.

6. The floating body according to Claim 5,
wherein the purge equipment includes
a purge gas supply line through which an inert gas flows into a fuel line on a fuel consumer side with respect to the main gas fuel valve, and
an outflow line through which the fuel in the fuel line flows out in a case where the inert gas flows into the fuel line from the purge gas supply line, and
the bleed line also serves as the outflow line.

7. The floating body according to any one of Claims 1 to 3, further comprising:
a detection unit that detects fuel leaked in the second fuel preparation room; and
ventilation equipment that ventilates the second fuel preparation room.
